# EUROPEAN PATENT SPECIFICATION

(11) **EP 2 898 210 B1**
(45) Date of publication and mention of the grant of the patent: **06.01.2021**
(21) Application number: 13838696.6
(22) Date of filing: 24.08.2013
(51) Int. Cl.: F02K 1/30, F02K 9/86, F02K 3/00, F02C 9/20, F02K 1/06, F02K 1/76

(54) **SYSTEM FOR DECOUPLING DRIVE SHAFT OF VARIABLE AREA FAN NOZZLE**
SYSTEM ZUM ENTKOPPELN EINER ANTRIEBSWELLE EINER VERSTELLBAREN FAN-DÜSE
SYSTÈME DE DÉSOLIDARISATION D'ARBRE D'ENTRAÎNEMENT DE TUYÈRE DE SOUFFLANTE DE SECTION VARIABLE

(30) Priority: 19.09.2012 US 201213622526
(43) Date of publication of application: 29.07.2015
(73) Proprietor: United Technologies Corporation, Farmington, CT 06032 (US)
(72) Inventor: MARCHAJ, Ian T., Windsor Locks, Connecticut 06096 (US)
(74) Representative: Dehns
(86) International application number: PCT/US2013/056535
(87) International publication number: WO 2014/046842

(56) References cited:
- EP-A2- 2 128 404
- EP-A2- 2 360 367
- WO-A1-2011/135217
- WO-A2-2011/066365
- US-A- 6 148 605
- US-A1- 2010 329 844
- US-B2- 8 015 828

## Description

### BACKGROUND OF THE INVENTION

In a high bypass ratio turbofan engine with a cascade style thrust reverser and a variable area fan nozzle, mechanical power from a stationary source is transmitted to the variable area fan nozzle through a telescoping or fixed length drive shaft that couples the variable area fan nozzle to the stationary source. The telescoping or fixed length drive shaft can add additional weight and complexity to the turbofan engine.

The document WO2011/135217 discloses a turbofan engine according to the preamble of claim 1.

### SUMMARY OF THE INVENTION

The present invention defines a nacelle assembly according to claim 1.

Further embodiments are defined in the dependent claims.

The present invention can be best understood from the following specification and drawings, the following of which is a brief description.

### BRIEF DESCRIPTION OF THE DRAWINGS

Figure 1 illustrates a schematic view of an embodiment of a gas turbine engine;
Figure 2 illustrates a schematic view of a fan nacelle and a pylon;
Figure 3 illustrates a schematic view of the fan nacelle with a stowed thrust reverser;
Figure 4 illustrates a schematic view of the fan nacelle with a deployed thrust reverser;
Figure 5 illustrates a schematic view of a stowed thrust reverser and a drive shaft of a variable area fan nozzle coupled with a motor;
Figure 6 illustrates a schematic view of a deployed thrust reverser and the drive shaft of the variable area fan nozzle uncoupled with the motor;
Figure 7 illustrates a side view of a first example clutch mechanism of the drive shaft; and
Figure 8 illustrates a side view of a second example clutch mechanism of the drive shaft.

### DETAILED DESCRIPTION OF THE PREFERRED EMBODIMENTS

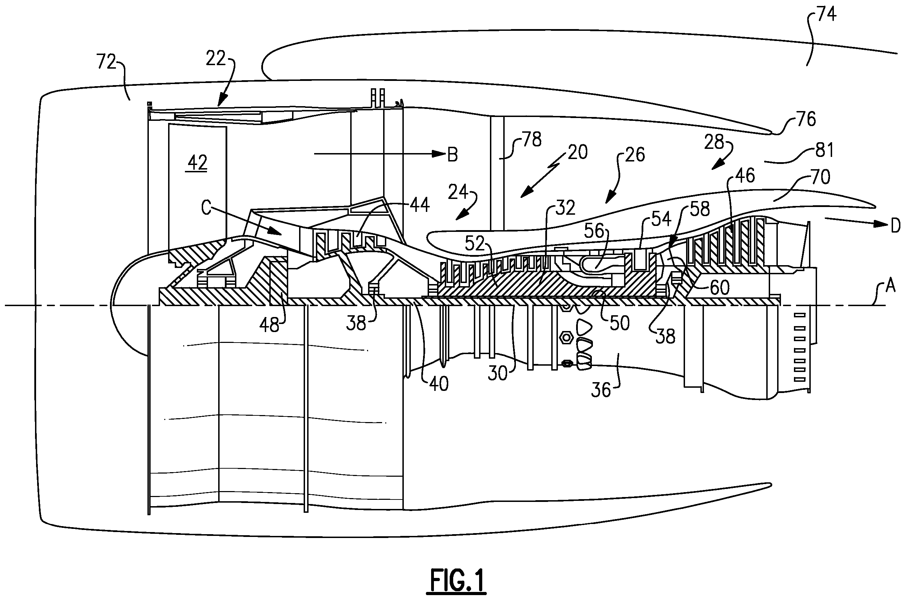

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features.

Although depicted as a turbofan gas turbine engine in the disclosed non-limiting embodiment, it should be understood that the concepts described herein are not limited to use with turbofans as the teachings may be applied to other types of turbine engines including three-spool or geared turbofan architectures.

The fan section 22 drives air along a bypass flowpath B while the compressor section 24 drives air along a core flowpath C for compression and communication into the combustor section 26 then expansion through the turbine section 28.

The gas turbine engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and a high pressure turbine 54.

A combustor 56 is arranged between the high pressure compressor 52 and the high pressure turbine 54.

A mid-turbine frame 58 of the engine static structure 36 is arranged generally between the high pressure turbine 54 and the low pressure turbine 46. The mid-turbine frame 58 further supports bearing systems 38 in the turbine section 28.

The inner shaft 40 and the outer shaft 50 are concentric and rotate via bearing systems 38 about the engine central longitudinal axis A, which is collinear with their longitudinal axes.

The core airflow C is compressed by the low pressure compressor 44, then the high pressure compressor 52, mixed and burned with fuel in the combustor 56, then expanded over the high pressure turbine 54 and low pressure turbine 46. The mid-turbine frame 58 includes airfoils 60 which are in the core airflow path. The turbines 46, 54 rotationally drive the respective low speed spool 30 and high speed spool 32 in response to the expansion.

The gas turbine engine 20 is in one example a high-bypass geared aircraft engine. In a further example, the gas turbine engine 20 bypass ratio is greater than about six (6:1) with an example embodiment being greater than ten (10:1). The geared architecture 48 is an epicyclic gear train (such as a planetary gear system or other gear system) with a gear reduction ratio of greater than about 2.3 (2.3:1). The low pressure turbine 46 has a pressure ratio that is greater than about five (5:1). The low pressure turbine 46 pressure ratio is pressure measured prior to inlet of low pressure turbine 46 as related to the pressure at the outlet of the low pressure turbine 46 prior to an exhaust nozzle.

In one disclosed embodiment, the gas turbine engine 20 bypass ratio is greater than about ten (10:1), and the fan diameter is significantly larger than that of the low pressure compressor 44. The low pressure turbine 46 has a pressure ratio that is greater than about five (5:1). The geared architecture 48 may be an epicycle gear train, such as a planetary gear system or other gear system, with a gear reduction ratio of greater than about 2.5 (2.5:1). It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the gas turbine engine 20 is designed for a particular flight condition- typically cruise at about 0.8 Mach and about 35,000 feet. The flight condition of 0.8 Mach and 35,000 feet, with the engine at its best fuel consumption, also known as bucket cruise Thrust Specific Fuel Consumption ("TSFC"). TSFC is the industry standard parameter of lbm of fuel being burned divided by lbf of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.45.

"Low corrected fan tip speed" is the actual fan tip speed in feet per second divided by an industry standard temperature correction of [(Tram °R) / 518.7)^{1.5}]. The "Low corrected fan tip speed" as disclosed herein according to one non-limiting embodiment is less than about 1150 feet per second (351 meters per second).

A core nacelle 70 surrounds and protects the gas turbine engine 20. The fan section 22 communicates the core flowpath C into the core nacelle 70. A core engine exhaust D exits the core nacelle 70 through a core nozzle 76.

A fan nacelle 72 at least partially surrounds the core nacelle 70. The fan nacelle 72 is attached to a pylon 74. The core nacelle 70 is supported within the fan nacelle 72 by a structure 78. In one example, the structure 78 is a fax exit guide vane. The bypass flowpath B is defined between the core nacelle 70 and the fan nacelle 72 and is discharged through a fan nozzle exit area 81 defined between the fan nacelle 72 and the core nacelle 70.

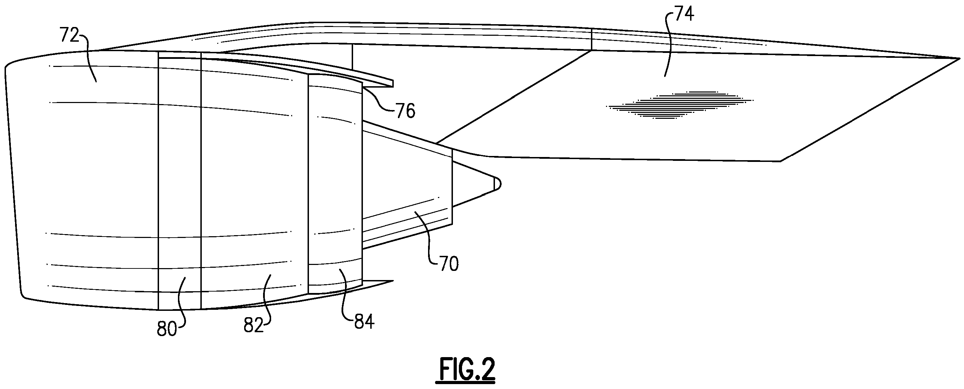

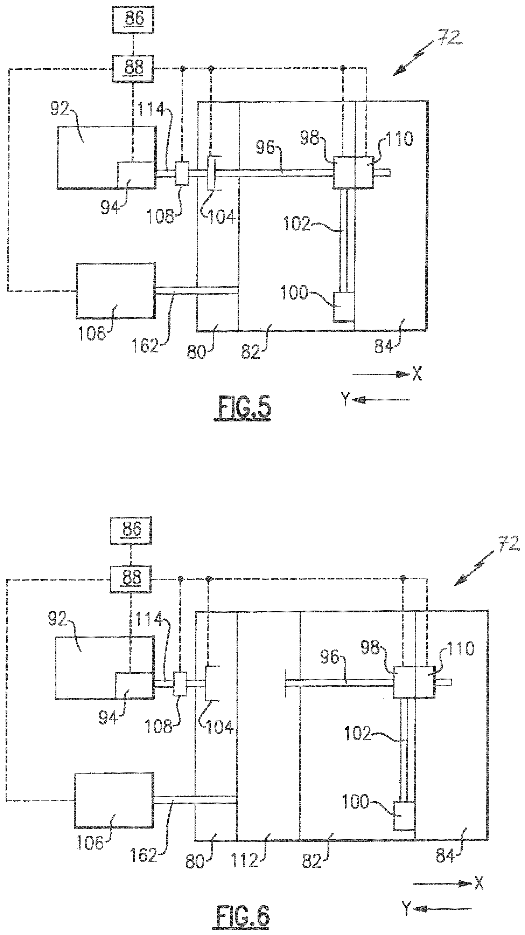

Figure 2 shows the fan nacelle 72 mounted on a pylon 74. The fan nacelle 72 includes a torque box 80, a thrust reverser 82 and a variable area fan nozzle 84. The torque box 80 and the pylon 74 are both static structures 92 (shown in Figures 5 and 6). The thrust reverser 82 is moveable between a stowed position and a deployed position.

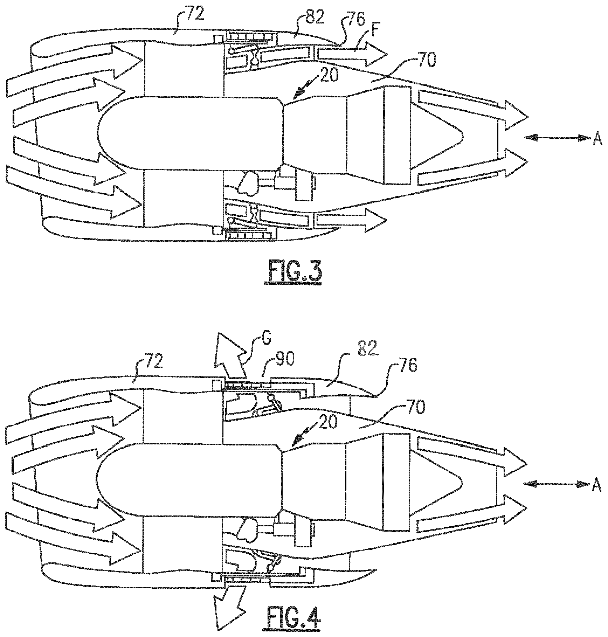

Figure 3 shows the thrust reverser 82 in the stowed position. The thrust reverser 82 is in the stowed position during take off and during cruise conditions. In the stowed position, the thrust reverser 82 directs the airflow in the bypass flowpath B in a direction F that is approximately parallel to the longitudinal axis A for normal forward operation.

Figure 4 shows the thrust reverser 82 in the deployed condition. The thrust reverser 82 is in the deployed condition during landing. In the deployed condition, the thrust reverser 82 have moved, directing the airflow in the bypass flowpath B outwardly in a direction G through a discharge duct 90 to redirect the fan 42 air during reverse thrust operation and to assist in deceleration of the aircraft. The thrust reverser 82 reduces the length of the landing roll of the aircraft without loss of directional control of the aircraft.

Figure 5 illustrates the fan nacelle 72 during take off and cruise conditions, and Figure 6 illustrates the fan nacelle 72 during landing. The variable area fan nozzle 84 is moveable during flight to change the area and geometry of the fan nozzle exit area 81 (shown in Figure 1) to change the flow of air in the bypass flowpath B. A sensor 86 monitors flight conditions and supplies this data to a Full Authority Digital Engine Control 88 (FADEC).

The motor 94 is mounted on one of the static structures 92. When specific flight conditions are detected by the sensor 86, the Full Authority Digital Engine Control 88 sends a signal to a motor 94 to move the variable area fan nozzle 84 to vary the fan nozzle exit area 81 to generate the desired thrust. The motor 94 transmits mechanical power along two drive shafts 114 and 96 that are coupled to each other by a clutch mechanism 104. The drive shaft 114 is coupled to the motor 94. The drive shaft 96 is coupled to a gearbox 98, which is connected to a second gearbox 100 by a flex shaft 102. The Full Authority Digital Engine Control 88 sends a signal to the motor 94 to rotate the coupled drive shafts 96 and 114 to actuate the gearboxes 98 and 100 to move the variable area fan nozzle 84 to vary the fan nozzle exit area 81. The thrust reverser 82 is stowed during flight and when the drive shafts 114 and 96 are coupled by the clutch mechanism 104 to allow movement of the variable area fan nozzle 84.

As shown in Figure 6, during landing, the thrust reverser 82 moves to the deployed position to assist in landing. In response to an action by a pilot of the aircraft, the Full Authority Digital Engine Control 88 sends a signal to a motor 106 to rotate a drive shaft 162 to move the thrust reverser 82 to the deployed position. The Full Authority Digital Engine Control 88 also sends a signal to brakes 108 on the static structure 92 (the pylon 74 or the torque box 80) and brakes 110 near the variable area fan nozzle 84 to secure and lock the variable area fan nozzle 84 relative to the thrust reverser 82 so that the variable area fan nozzle 84 does not move as the thrust reverser 82 is deployed.

As the thrust reverser 82 moves in a direction X to the deployed condition, the drive shafts 96 and 114 are decoupled by the clutch mechanism 104. That is, the drive shaft 96 that moves the variable area fan nozzle 84 is decoupled from the motor 94 by the clutch mechanism 104. The variable area fan nozzle 84 is latched to the thrust reverser 82 by the brakes 108 and 110 and moves with the thrust reverser 82. As the thrust reverser 82 moves to the deployed position shown in Figure 6, a space 112 is defined between the torque box 80 and the thrust reverser 82.

When the Full Authority Digital Engine Control 88 sends a signal to the motor 106 to return the thrust reverser 82 to the stowed position, the thrust reverser 82 moves in a direction Y. The drive shaft 96 recouples with the drive shaft 114 through the clutch mechanism 104. The Full Authority Digital Engine Control 88 also sends a signal to the brakes 108 and 110 to release so that the variable area fan nozzle 84 is again moveable.

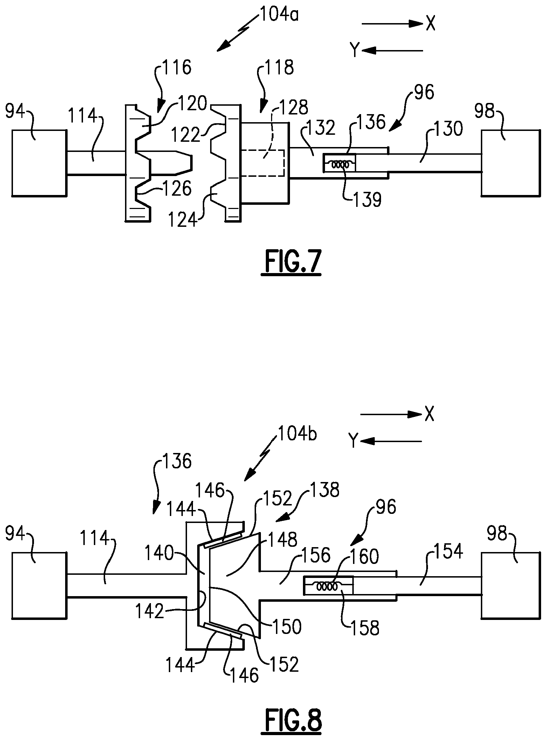

Figure 7 illustrates a first example of a clutch mechanism 104a when the thrust reverser 82 is deployed. The clutch mechanism 104a is a positive clutch and includes a first portion 116 coupled to the motor 94 and a second portion 118 coupled to the gearbox 98 that moves the variable area fan nozzle 84. The clutch mechanism 104a provides good torque transmission.

In one example, the first portion 116 includes a plurality of projections 120 that are each receivable in one of a plurality of recesses 122 of the second portion 118, and the second portion 118 includes a plurality of projections 124 that are each receivable in one of a plurality of recesses 126 of the first portion 116. A portion of the drive shaft 114 is receivable in a slot 128 of the second portion 118.

When the thrust reverser 82 is in the stowed position, each of the projections 120 of the first portion 116 are received in one of the plurality of recesses 122 of the second portion 118, and each of the plurality of projections 124 of the second potion 118 are received in one of the plurality of recesses 126 of the first portion 116. A portion of the drive shaft 114 is received in the slot 128 of the second portion 118.

When the thrust reverser 82 moves to the deployed position, the second portion 118 moves in the direction X, removing the projections 124 and 120 from the recesses 126 and 122, respectively, decoupling the drive shafts 96 and 114 at the clutch mechanism 104a, as shown in Figure 7.

When the thrust reverser 82 returns to the stowed position, the second portion 118 of the clutch mechanism 104a moves in the direction Y, and the projections 124 and 120 are received in the recesses 126 and 122, respectively, providing phase orientating of the first portion 116 and the second portion 118 of the clutch mechanism 104a. The portion of the drive shaft 114 is also received in the slot 128 of the second portion 118 to provide alignment and coupling of the features of the first portion 116 and the second portion 118. This engagement re-couples the drive shaft 96 to the motor 94 through the clutch mechanism 104a.

The drive shaft 96 also includes a first portion 130 receivable in an opening 136 of a second portion 132. A resilient member 139 is located in the opening 136 of the second portion 132. In one example, the resilient member 139 is a compression spring. When the thrust reverser 82 is stowed and the clutch mechanism 104a couples the drive shafts 114 and 96, the resilient member 139 compensates for any overstow compression.

Figure 8 illustrates a second example of a clutch mechanism 104b when the thrust reverser 82 is deployed. The clutch mechanism 104b is a frictional clutch and includes a first portion 136 coupled to the motor 94 and a second portion 138 coupled to the gearbox 98 that moves the variable area fan nozzle 84.

In one example, the first portion 136 includes a groove 140 including a surface 142 and opposing walls 144 that each extend at an oblique angle relative to the surface 142. Friction material 146 is located on the opposing walls 144. The second portion 138 includes a projection 148 including a surface 150 and opposing walls 152 that each extend at an oblique angle relative to the surface 150. The angle between the surface 142 and the opposing walls 144 is approximately equal to the angle between the surface 150 and the opposing walls 152. In another example, the first portion 136 includes the projection 148, and the second portion 138 includes the groove 140.

When the thrust reverser 82 is in the stowed position, the projection 148 is received in the groove 140. The friction material 146 located between the opposing walls 144 and 152 provides friction to retain torque and couple the drive shafts 96 and 114 together. The opposing walls 144 and 152 also provide a beveled surface for alignment.

When the thrust reverser 82 moves to the deployed position, the second portion 138 moves in the direction X, removing the projection 148 from the groove 140, as shown in Figure 8.

When the thrust reverser 82 returns to the stowed position, the second portion 138 moves in the direction Y. The projection 148 is received in the groove 140, aligning the first portion 136 and the second portion 138. This engagement re-couples the drive shaft 96 to the motor 94 through the clutch mechanism 104b.

The drive shaft 96 also includes a first portion 154 receivable in an opening 158 of a second portion 156 of the drive shaft 96. A resilient member 160 is located in the opening 158 of the second portion 156. In one example, the resilient member 160 is a compression spring. When the thrust reverser 82 is stowed and the first portion 136 and the second portion 138 are engaged, the resilient member 160 compensates for any overstow compression.

By employing a clutch mechanism 104 that allows for decoupling of the drive shafts 96 and 114, the complexity and the weight of the gas turbine engine 20 are reduced.

The foregoing description is only exemplary of the principles of the invention. Many modifications and variations are possible in light of the above teachings. It is, therefore, to be understood that within the scope of the appended claims, the invention may be practiced otherwise than using the example embodiments which have been specifically described. For that reason the following claims should be studied to determine the true scope and content of this invention.

## Claims

1. A nacelle assembly comprising:
a thrust reverser (82) moveable between a stowed position and a deployed position;
a variable area fan nozzle (84);
a first motor (106) operable to move the thrust reverser between the stowed position and the deployed position;
a second motor (94) operable to move the variable area fan nozzle relative to the thrust reverser;
a drive shaft including a first portion (114) coupled to the second motor and a second portion (96) coupled to the variable area fan nozzle;
a clutch mechanism (104a) that couples the first portion (114) of the drive shaft and the second portion (96) of the drive shaft when the thrust reverser is in the stowed position to allow movement of the variable area fan nozzle relative to the thrust reverser, and decouples the first portion of the drive shaft from the second portion of the drive shaft when the thrust reverser is in the deployed position;
the clutch mechanism including a first feature (116) connected to the first portion of the drive shaft and a second feature (118) connected to the second portion of the drive shaft, the first feature having a first shape and the second feature having a second shape, the first shape engaging the second shape when the drive shaft is coupled, one of the first feature and second feature movable along a longitudinal axis of the drive shaft to engage and disengage from the other of the first and second feature;
a compression spring (139) disposed in an opening (136) of the drive shaft, to compensate for any overstow compression;
the nacelle assembly being **characterised in that** it further comprises brakes (110) operable to limit rotation of the second portion of the drive shaft when the drive shaft is decoupled; and
a control (88) configured to:
send a first signal to the first motor to move the thrust reverser to the deployed position and to disengage the clutch mechanism and send a second signal to the brakes to prevent movement of the variable area fan nozzle relative to the thrust reverser when the drive shaft is decoupled; and
send a third signal to the first motor to move the thrust reverser to the stowed position and to engage the clutch mechanism and a fourth signal to the brakes to allow an amount of movement of the variable area fan nozzle relative to the thrust reverser while the drive shaft is coupled.

2. The nacelle assembly as recited in claim 1 wherein the second motor (94) is mounted to a static structure (90).

3. The nacelle assembly as recited in claim 2 wherein the static structure (90) is a torque box of a fan nacelle or a pylon.

4. The nacelle assembly as recited in any preceding claim wherein the second portion (96) of the drive shaft is coupled to a gearbox (98) that moves the variable area fan nozzle (84).

5. The nacelle assembly as recited in any preceding claim wherein the thrust reverser (82) and the variable area fan nozzle (84) are part of a fan nacelle (72), and the variable area fan nozzle is moveable to change a flow of air through a bypass flowpath defined between the fan nacelle and a core nacelle (70) located inside the fan nacelle.

6. The nacelle assembly as recited in any of claims 1 to 5 comprising:
a core nacelle (70) surrounding a gas turbine engine, wherein the gas turbine engine includes a fan section, and the fan section communicates airflow into the core nacelle; and
a fan nacelle (72) at least partially surrounding the core nacelle, wherein a bypass flowpath is defined between the core nacelle and the fan nacelle, and wherein the fan nacelle includes the thrust reverser (82), said variable area fan nozzle (84) being moveable to change a flow of air through the bypass flowpath.

7. The nacelle assembly as recited in claim 1 including a sensor that detects flight conditions and a control that sends a signal based on the flight conditions to the motor to move the variable area fan nozzle, wherein the flight conditions are at least one of altitude and a mach number.

8. The nacelle assembly as recited in any preceding claim including brakes (108,110) that latch the variable area fan nozzle (84) to the thrust reverser (82).

## Patentansprüche

1. Gondelanordnung, umfassend:
eine Schubumkehreinrichtung (82), die zwischen einer verstauten Position und einer ausgefahrenen Position beweglich ist;
eine verstellbare Fan-Düse (84);
einen ersten Motor (106), der so betrieben werden kann, dass er die Schubumkehreinrichtung zwischen der verstauten Position und der ausgefahrenen Position bewegt;
einen zweiten Motor (94), der so betrieben werden kann, dass er die verstellbare Fan-Düse relativ zur Schubumkehreinrichtung bewegt;
eine Antriebswelle, die einen ersten Abschnitt (114), der an den zweiten Motor gekoppelt ist, und einen zweiten Abschnitt (96), der an die verstellbare Fan-Düse gekoppelt ist, beinhaltet;
einen Kupplungsmechanismus (104a), der den ersten Abschnitt (114) der Antriebswelle und den zweiten Abschnitt (96) der Antriebswelle koppelt, wenn sich die Schubumkehreinrichtung in der verstauten Position befindet, um eine Bewegung der verstellbaren Fan-Düse relativ zur Schubumkehreinrichtung zu ermöglichen, und den ersten Abschnitt der Antriebswelle von dem zweiten Abschnitt der Antriebswelle entkoppelt, wenn sich die Schubumkehreinrichtung in der ausgefahrenen Position befindet;
wobei der Kupplungsmechanismus ein erstes Merkmal (116), das mit dem ersten Abschnitt der Antriebswelle verbunden ist, und ein zweites Merkmal (118), das mit dem zweiten Abschnitt der Antriebswelle verbunden ist, beinhaltet, wobei das erste Merkmal eine erste Form aufweist und das zweite Merkmal eine zweite Form aufweist, wobei die erste Form in die zweite Form eingreift, wenn die Antriebswelle gekoppelt ist, wobei sich eines aus dem ersten Merkmal und zweiten Merkmal entlang einer Längsachse der Antriebswelle bewegt, um in das andere aus dem ersten and zweiten Merkmal einzugreifen und sich von diesem zu lösen;
eine Druckfeder (139), die in einer Öffnung (136) der Antriebswelle angeordnet ist, um jeglichen Überstaudruck auszugleichen;
wobei die Gondelanordnung **dadurch gekennzeichnet ist, dass** sie ferner Bremsen (110) umfasst, die so betrieben werden können, dass sie eine Drehung des zweiten Abschnitts der Antriebswelle, wenn die Antriebswelle entkoppelt ist, beschränkt; und
eine Steuerung (88), die so konfiguriert ist, dass:
sie ein erstes Signal an den ersten Motor sendet, um die Schubumkehreinrichtung in die ausgefahrene Position zu bewegen und den Kupplungsmechanismus zu lösen, und ein zweites Signal an die Bremsen sendet, um eine Bewegung der verstellbaren Fan-Düse relativ zur Schubumkehreinrichtung zu verhindern, wenn die Antriebswelle entkoppelt ist; und
ein drittes Signal an den ersten Motor sendet, um die Schubumkehreinrichtung in die verstaute Position zu bewegen und den Kupplungsmechanismus in Eingriff zu nehmen, und ein viertes Signal an die Bremsen sendet, um eine Ausmaß von Bewegung der verstellbaren Fan-Düse relativ zur Schubumkehreinrichtung zu ermöglichen, während die Antriebswelle gekoppelt ist.

2. Gondelanordnung nach Anspruch 1, wobei der zweite Motor (94) an einer statischen Struktur (90) befestigt ist.

3. Gondelanordnung nach Anspruch 2, wobei die statische Struktur (90) ein Drehmomentkasten einer Fan-Gondel oder ein Mast ist.

4. Gondelanordnung nach einem der vorstehenden Ansprüche, wobei der zweite Abschnitt (96) der Antriebswelle an einen Getriebekasten (98) gekoppelt ist, der die verstellbare Fan-Düse (84) bewegt.

5. Gondelanordnung nach einem der vorstehenden Ansprüche, wobei die Schubumkehreinrichtung (82) und die verstellbare Fan-Düse (84) Teil einer Fan-Gondel (72) sind und die verstellbare Fan-Düse beweglich ist, um einen Luftstrom durch einen Nebenstromweg zu verändern, der zwischen der Fan-Gondel und einer Kerngondel (70), die innerhalb der Fan-Gondel angeordnet ist, definiert ist.

6. Gondelanordnung nach einem der Ansprüche 1 bis 5, umfassend:
eine Kerngondel (70), die ein Gasturbinentriebwerk umgibt, wobei das Gasturbinentriebwerk einen Fan-Abschnitt beinhaltet und der Fan-Abschnitt einen Luftstrom in die Kerngondel leitet; und
eine Fan-Gondel (72), die mindestens teilweise die Kerngondel umgibt, wobei ein Nebenstromweg zwischen der Kerngondel und der Fan-Gondel definiert ist und wobei die Fan-Gondel die Schubumkehreinrichtung (82) beinhaltet, wobei die verstellbare Fan-Düse (84) bewegt werden kann, um einen Luftstrom durch den Nebenstromweg zu verändern.

7. Gondelanordnung nach Anspruch 1, einen Sensor, der Flugbedingungen erkennt, und eine Steuerung beinhaltend, die ein Signal basierend auf den Flugbedingungen an den Motor sendet, um die verstellbare Fan-Düse zu bewegen, wobei die Flugbedingungen mindestens eines aus Flughöhe und einer Mach-Zahl sind.

8. Gondelanordnung nach einem der vorstehenden Ansprüche, Bremsen (108, 110) beinhaltend, die die verstellbare Fan-Düse (84) in die Schubumkehreinrichtung (82) einklinken.

## Revendications

1. Ensemble nacelle comprenant :
un inverseur de poussée (82) mobile entre une position arrimée et une position déployée ;
une tuyère de soufflante de section variable (84) ;
un premier moteur (106) pouvant fonctionner pour déplacer l'inverseur de poussée entre la position arrimée et la position déployée ;
un second moteur (94) pouvant fonctionner pour déplacer la tuyère de soufflante de section variable par rapport à l'inverseur de poussée ;
un arbre d'entraînement comportant une première partie (114) couplée au second moteur et une seconde partie (96) couplée à la tuyère de soufflante de section variable ;
un mécanisme d'embrayage (104a) qui couple la première partie (114) de l'arbre d'entraînement et la seconde partie (96) de l'arbre d'entraînement lorsque l'inverseur de poussée est en position arrimée pour permettre le mouvement de la tuyère de soufflante de section variable par rapport à l'inverseur de poussée, et découple la première partie de l'arbre d'entraînement de la seconde partie de l'arbre d'entraînement lorsque l'inverseur de poussée est dans la position déployée ;
le mécanisme d'embrayage comportant une première caractéristique (116) reliée à la première partie de l'arbre d'entraînement et une seconde caractéristique (118) reliée à la seconde partie de l'arbre d'entraînement, la première caractéristique ayant une première forme et la seconde caractéristique ayant une seconde forme, la première forme venant en prise avec la seconde forme lorsque l'arbre d'entraînement est couplé, l'une des première et seconde caractéristiques étant mobile le long d'un axe longitudinal de l'arbre d'entraînement pour venir en prise avec et se désengager de l'autre des première et seconde caractéristiques ;
un ressort de compression (139) disposé dans une ouverture (136) de l'arbre d'entraînement, pour compenser toute compression de surarrimage ;
l'ensemble nacelle étant **caractérisé en ce qu'**il comprend en outre des freins (110) pouvant fonctionner pour limiter la rotation de la seconde partie de l'arbre d'entraînement lorsque l'arbre d'entraînement est découplé ; et
une commande (88) configurée pour :
envoyer un premier signal au premier moteur pour déplacer l'inverseur de poussée vers la position déployée et pour désengager le mécanisme d'embrayage et envoyer un deuxième signal aux freins pour empêcher le mouvement de la tuyère de soufflante de section variable par rapport à l'inverseur de poussée lorsque l'arbre d'entraînement est découplé ; et
envoyer un troisième signal au premier moteur pour déplacer l'inverseur de poussée vers la position arrimée et pour mettre en prise le mécanisme d'embrayage et un quatrième signal aux freins pour permettre une quantité de mouvement de la tuyère de soufflante de section variable par rapport à l'inverseur de poussée lorsque l'arbre d'entraînement est couplé.

2. Ensemble nacelle selon la revendication 1, dans lequel le second moteur (94) est monté sur une structure statique (90).

3. Ensemble nacelle selon la revendication 2, dans lequel la structure statique (90) est un caisson de torsion d'une nacelle de soufflante ou d'un pylône.

4. Ensemble nacelle selon une quelconque revendication précédente, dans lequel la seconde partie (96) de l'arbre d'entraînement est couplée à une boîte de vitesses (98) qui déplace la tuyère de soufflante de section variable (84).

5. Ensemble nacelle selon une quelconque revendication précédente, dans lequel l'inverseur de poussée (82) et la tuyère de soufflante de section variable (84) font partie d'une nacelle de soufflante (72), et la tuyère de soufflante de section variable est mobile pour modifier un écoulement d'air à travers un trajet d'écoulement de dérivation défini entre la nacelle de soufflante et une nacelle centrale (70) située à l'intérieur de la nacelle de soufflante.

6. Ensemble nacelle selon l'une quelconque des revendications 1 à 5, comprenant :
une nacelle centrale (70) entourant un moteur à turbine à gaz, dans lequel le moteur à turbine à gaz comporte une section de soufflante, et la section de soufflante communique un écoulement d'air dans la nacelle centrale ; et
une nacelle de soufflante (72) entourant au moins partiellement la nacelle centrale, dans lequel un trajet d'écoulement de dérivation est défini entre la nacelle centrale et la nacelle de soufflante, et dans lequel la nacelle de soufflante comporte l'inverseur de poussée (82), ladite tuyère de soufflante de section variable (84) étant mobile pour modifier un écoulement d'air à travers le trajet d'écoulement de dérivation.

7. Ensemble nacelle selon la revendication 1, comportant un capteur qui détecte les conditions de vol et une commande qui envoie un signal sur la base des conditions de vol au moteur pour déplacer la tuyère de soufflante de section variable, dans lequel les conditions de vol sont au moins l'un parmi l'altitude et un nombre de Mach.

8. Ensemble nacelle selon une quelconque revendication précédente, comportant des freins (108, 110) qui verrouillent la tuyère de soufflante de section variable (84) sur l'inverseur de poussée (82).
